# EUROPÄISCHE PATENTSCHRIFT

(11) **EP 2 569 495 B1**
(45) Veröffentlichungstag und Bekanntmachung des Hinweises auf die Patenterteilung: **08.10.2014**
(21) Anmeldenummer: 11719465.4
(22) Anmeldetag: 26.04.2011
(51) Int. Cl.: E04H 12/02, E04H 12/04, E04H 12/06, E04H 12/10, F03D 11/04

(54) **TURM FÜR EINE WINDKRAFTANLAGE UND VERFAHREN ZUM ERRICHTEN EINES TURMES FÜR EINE WINDKRAFTANLAGE**
TOWER FOR A WIND POWER PLANT AND METHOD FOR ERECTING A TOWER FOR A WIND POWER PLANT
MÂT POUR ÉOLIENNE ET PROCÉDÉ PERMETTANT D'ÉRIGER UN MÂT POUR ÉOLIENNE

(30) Priorität: 12.05.2010 DE 102010020443
(43) Veröffentlichungstag der Anmeldung: 20.03.2013
(73) Patentinhaber: TimberTower GmbH, 30165 Hannover (DE)
(72) Erfinder: PRASS, Gregor, 22529 Hamburg (DE)
(74) Vertreter: Wetzel, Philipp
(86) Internationale Anmeldenummer: PCT/EP2011/002076
(87) Internationale Veröffentlichungsnummer: WO 2011/141124

(56) Entgegenhaltungen:
- WO-A1-03/083236
- DE-A1- 3 842 026
- DE-A1-102007 006 652

## Beschreibung

Die Erfindung betrifft einen Turm für eine Windkraftanlage mit Wänden, die zumindest teilweise aus einzelnen Wandabschnitten aus einem Holzwerkstoff hergestellt sind, wobei die Wandabschnitte über Verbindungsmittel miteinander verbunden sind, wobei im Turminneren zumindest teilweise ein Lehrgerüst vorgesehen ist, mit dem die Wandabschnitte haltend verbunden sind, sowie ein Verfahren zum Errichten eines solchen Turmes.

Bei einer Windkraftanlage handelt es sich um eine Vorrichtung zur Erzeugung von elektrischer Energie. Die Windkraftanlage ist mit einem Fundament, einem Turm, der auf dem Fundament errichtet wird, und einer Gondel, die auf dem Turm angeordnet wird, versehen. An der Gondel befindet sich die mit Rotorblättern verbundene Antriebseinheit zur Energieerzeugung.

Die Konstruktion des Turms ist ausgerichtet auf die durch die Gondel auf den Turm erzeugte statische Belastung und die durch die Rotation der Drehflügel des Rotors und der Bewegungsmöglichkeit der Gondel in Abhängigkeit der Windrichtung erzeugten dynamischen Belastungen. Bekannte Türme werden aus Stahlringen oder Betonelementen hergestellt. Die Grundflächen der bekannten Türme sind dabei entweder Polygone oder ringförmige Kreissegmente. Polygonale Türme, die aus einzelnen Segmenten aus Beton hergestellt sind, sind bekannt aus WO 2003/069099 A. Des Weiteren ist bekannt, solche polygonalen Türme aus Holz zu errichten (DE 10 2007 006 652 A1).

WO 03/083236A1 offenbart einen Turm für eine Windkraftanlage, bei dem ein Gittermast errichtet wird, um den herum eine Hülle angebracht wird. Der Gittermast trägt dabei die gesamte Last, die auf den Turm wirkt. Dabei besteht eine Trennung zwischen strukturell funktionierenden Elementen (Gittermast) und einer nicht strukturellen Hülle, die die Form des Turms in Form eines Vollkörperturms bewirkt. Die Verkleidung wird entweder direkt am Trum angeschraubt oder mit diesem über Klemmkräfte in Verbindung gebracht. Eine Gitterstruktur bzw. ein Gitterturm wird hier als kostentechnische Vorteile gegenüber einem Vollflächentrum aufweisend und lasttechnisch vorteilhaft gegenüber einem Vollflächenturm seiend dargestellt.

Unter wirtschaftlichen Gesichtspunkten ist es erwünscht, die Höhe der Türme wirtschaftlich maximiert zu errichten, da der Ertrag einer Windkraftanlage von der Nabenhöhe des Rotors abhängt und der Ertrag mit Zunahme der Höhe steigt. Gleichzeitig steigen die durch die größere Höhe des Turmes entstehenden Anforderungen an die Statik und das Material bzw. den Materialaufwand des Turmes. Die Wandstärken nehmen zu und dadurch steigt der Errichtungsaufwand des Turms.

Ein dabei entscheidender Aspekt bei Türmen, die aus abschnittsweise angeordneten Segmenten gebildet werden, ist, dass die horizontalen Berührungsflächen der übereinander angeordneten Segmente empfindlich für Schubbelastungen bzw. Querkräfte sind. Dieses muss in der Statik der Türme berücksichtigt werden, damit diese Sollbruchstelle entschärft wird, was zu verstärktem Materialeinsatz führt, und insbesondere einen Einsatz von aufwändigen Verbindungsmittel bedingt.

Es hat sich gezeigt, dass Türme für Windkraftanlagen aus Holz herstellbar sind, mit denen sich kostengünstig, schnell und unter Materialeinsparung Türme erstellen lassen. Besonders günstig hat sich dabei erwiesen, diese Türme vor Ort aus Einzelbestandteilen zu fertigen, die jeweils direkt mit den benachbarten Elementen über Verbindungsmittel verbunden werden. Dabei hat sich als jedoch das Errichtungsverfahren als verbesserungswürdig erwiesen, dahingehend, dass die einzelnen Bestandteile schnell und mit hohe Präzision miteinander verbunden werden können, ohne das große Montagetoleranzen auftreten.

Ein weiterer Aspekt bei der Konstruktion hoher Windkraftanlagen ist der sogenannte Freilauf, bei dem es sich um den Abstand der Rotorspitze zum Turm handelt. Die Rotorgröße wird dabei bestimmt von der Auskragung des Rotors von der Turmmittelachse aus gesehen über die Turmaußenseite hinaus und der Höhe des Turm der Windkraftanlage.

Aufgabe der Erfindung ist es daher, einen Turm für eine Windkraftanlage bereit zu stellen, der eine größere Rotorblattlänge bei gleichbleibender Höhe des Turms der Windkraftanlage und bei gleichbleibender Auskragung des Rotors von der Turmmittelachse aus gesehen über die Turmaußenseite hinaus ermöglicht. Weiterhin ist es die Aufgabe der Erfindung, ein Verfahren für die Errichtung eines solchen Turmes zu schaffen.

Die erfindungsgemäße Aufgabe wird hinsichtlich des Turm dadurch gelöst, dass die Wandabschnitte aus einem Holzwerkstoff hergestellt sind, wobei die Wandabschnitte so auf dem Lehrgerüst angeordnet sind, dass eine bei einem Vertikalschnitt durch die aus Wandabschnitten gebildete Turmwand entstehende Mantellinie zumindest Abschnittsweise eine Kurve mit mit zunehmender Turmhöhe größer werdender Steigung ist, wobei das Lehrgerüst eine Montagehilfe ist, das zur Erzeugung der Steigung der Mantellinie dient, und wobei das Lehrgerüst keine statisch relevante Funktion im Turm selbst übernimmt.

Hierdurch wird es möglich, den Freilauf bei gleichbleibender Turmhöhe zu vergrößern, wobei gleichzeitig die Stabilität des Turms wenigstens beibehalten wird. Weiterhin lassen sich die einzelnen Wandabschnitt sicher aufeinander aufsetzen und montieren. Auf einfache Weise wird so die Montagegenauigkeit erhöht. Gleichzeitig kann die gesamte statische Belastung weiterhin durch die Wandelemente aufgenommen werden. Durch das Vorsehen einer zunehmenden Steigung in Abhängigkeit der Turmhöhe wird es möglich, die Rotorlänge bei gleichbleibender Turmhöhe und hinreichender Turmbasis zu vergrößern.

Eine weitere Lehre der Erfindung sieht vor, dass der Schnitt bei einem Turm mit einer polygonalen Grundfläche mittig durch einen Wandabschnitt verläuft. Dabei ist es vorteilhaft, wenn die Mantellinie wenigstens teilweise eine Parabel, ein Polynom, eine Exponentialfunktion, ein Kreisbogen und/oder eine Klothoide ist. Auf diese Weise lässt sich eine solide Basis für den Turm mit einem möglichst großen Freilauf für den Rotor erzeugen. Alternativ ist die Mantellinie abschnittsweise linear ansteigend ist.

Eine weitere Lehre der Erfindung sieht vor, dass das Lehrgerüst aus Holz besteht und/oder eine Fachwerkskonstruktion ist. Die Errichtung erfolgt dabei sukzessive mit fortschreitendem Baufortschritt. Das zu verwendende Holz ist dabei kostengünstig und sehr gut zu verarbeiten. Bevorzugt ist das Lehrgerüst aus einzelnen Abschnitten aufgebaut. Dabei ist es vorteilhaft, wenn die einzelnen Abschnitte vor Ort gefertigt werden, da damit der Transportaufwand reduziert wird. Dieses ist bevorzugt durch die Verwendung von Holz gewährleistet. Vorteilhaft ist des Weiteren, dass die Fachwerkskonstruktion wenigstens 4 Ständer aufweist, die mit Streben, Riegeln, Kopf- und Sohlenhölzern verbunden sind. Eine weitere Lehre der Erfindung sieht vor, dass das Podest aus wenigstens zwei Abschnitten gebildet ist. Dieses unterstützt auf einfache Weise die Montage, wobei das Gerüst selbst vorteilhafter Weise keine statisch relevante Funktion im Turm selbst übernimmt sonder die Wandabschnitte nach der Montage selbsttragend sind, so dass das Gerüst theoretisch abgebaut werden kann.

Eine weitere Lehre der Erfindung sieht vor, dass der Wandabschnitt nach dem Anbringen auf dem Lehrgerüst eine Biegung in Richtung der Mantellinie aufweist. Hierdurch wird auf einfache weise eine erfindungsgemäße Mantellinie bereitgestellt.

Eine weitere Lehre der Erfindung sieht vor, dass das Podest eines Abschnitt des Lehrgerüsts, der auf einen bereits errichteten darunterliegenden Abschnitt des Lehrgerüsts aufgesetzt ist, in Richtung zur Mittelachse des Turms äquivalent kleiner ausgeführt ist. Zusätzlich ist es vorteilhaft, wenn wenigstens ein Abschnitt des Lehrgerüsts einen Montagebereich zum Anbringen von Wandabschnitten aufweist, der zwischen dem Fuß des Abschnittes und dem Podest des Abschnittes angeordnet ist. Auf diese Weise lässt sich einfach eine gekrümmte Oberfläche erzeugen.

Eine weitere Lehre der Erfindung sieht vor, dass die Wandabschnitte zueinander Helix bildend versetzt angeordnet sind. Durch diese Anordnung zueinander wird die Schubbelastung/Querkraft über die Helix abgeleitet und es existiert kein Ansatzpunkt für ein Abheben des Turms an einer vorgegebenen Stelle. Aus diesem Grund können Wandstärken reduziert werden und es ist insbesondere möglich, einfachere und damit kostengünstigere Verbindungsmittel zu wählen. Gleichzeitig kann hierdurch auf einfache Weise eine erfindungsgemäße Mantellinie bereitgestellt werden.

Eine weitere Lehre der Erfindung sieht vor, dass es sich bei der Helix um eine Einfachhelix oder um eine aus mehreren Einfachhelices gebildete Mehrfachhelix handelt. Bei einer Mehrfachhelix ist vorteilhaft, dass die Anzahl der die Mehrfachhelix bildenden Einfachhelices mit der Anzahl der Wandabschnitte in einer horizontalen Ebene des Turms übereinstimmt. Bevorzugt sind die Wandabschnitte bei der Mehrfachhelix als auf die Spitze gestellte Raute vorgesehen. Die Raute ist dabei als Kreissegment vorgesehen oder durch zwei vertikal miteinander verbundene Dreiecke gebildet, wobei die Flächen der Dreiecke in einem Winkel zueinander angeordnet sind, der 360° geteilt durch die Anzahl der Einfachhelices beträgt. Weiterhin ist vorteilhaft, dass die oberen Stoßseiten der einzelnen Bestandteile einer Helix eine durchgehende Linie und/oder eine Stufung aufweisen. Dadurch wird die Belastungsableitung im Turm verbessert.

Eine weitere Lehre der Erfindung sieht vor, dass die Wandabschnitte wenigstens teilweise in den Stößen Schlitze aufweisen, die quer zur Stoßrichtung und/oder längs zur Stoßrichtung angeordnet sind. Bevorzugt werden in die Schlitze Verbindungsmittel eingesetzt, bei denen es sich bevorzugt um Metallbleche, besonders bevorzugt um Lochbleche, handelt, die bevorzugt verklebt werden. Zusätzlich können die Stoßöffnungen mit beispielsweise einem Tape oder Plexiglas abgeklebt werden. Bevorzugt erfolgt das Einbringen des Klebstoffes durch Verspritzen der Räume zwischen Bauteil und Verbindungselement.

Alternativ können Holzteile bzw. Holzzugdübel verwendet werden, wenn es sich bei den Bestandteilen um Holzelemente handelt. Bei diesen Verbindungsmitteln handelt es sich um kostengünstige Elemente, die allerdings die notwendigen Festigkeiten hinsichtlich Schub bzw. Schubbelastungen zwischen den einzelnen Bestandteilen bereit stellen.

Neben den Betriebsbelastungen, die auf den Turm einwirken, wirken auch klimatische Belastungen auf den Turm. Bei Stahltürmen wird dieser klimatischen Belastung durch das Aufbringen eines Anstriches auf den Turm entgegengewirkt. Beim Einsatz von Stahlbeton nimmt das Stahlgerüst die Zugbelastungen des Turmes auf. Die Betonüberdeckung nimmt die Druckbelastungen auf und dient gleichzeitig zum Schutz der Stahlkonstruktion gegen die Umwelteinflüsse in Form von Feuchtigkeit und chemischen Reaktionen durch die umgebende Atmosphäre. Die Dicke des Betons muss gewährleisten, dass das Stahlgerüst gegen diese Belastungen geschützt ist. Bei Holzkonstruktionen werden entsprechende Witterungsbelastungen durch Anstriche entgegengewirkt. Gleichzeitig lassen sich nur Holzmaterialien, die für den Außeneinsatz zugelassen sind, für die Konstruktion von Holztürmen einsetzen.

Eine weitere Lehre der Erfindung sieht deshalb vor, dass auf die äußere Oberfläche des Turms wenigstens teilweise eine Beschichtung aufgebracht ist, wobei die Beschichtung bevorzugt so aufgebracht wird, dass die Beschichtung Zugbelastungen aufnimmt, die auf die äußere Oberfläche des Turms wirken, und dass die Beschichtung die äußere Oberfläche gegen von außen auf die Oberfläche des Turmes einwirkende Umwelteinflüsse, insbesondere Feuchtigkeit, abdichtet.

Bezogen auf Holztürme wird es durch die Beschichtung möglich, Holzwerkstoffe und deren Verbindungsmittel einzusetzen, die lediglich eine Zulassung für den Innenausbau besitzen.

Eine weitere Lehre der Erfindung sieht vor, dass die Beschichtung im beschichteten Abschnitt des Turms vollflächig aufgebracht ist, und den beschichteten Abschnitt umhüllt. Dabei ist vorteilhaft, dass es sich bei der Beschichtung um einen Schichtstoff, eine Folie, ein Gewebe, ein Textil oder eine Platte handelt. Besonders bevorzugt handelt es sich um eine Folie, eine Platte, ein Gewebe und/oder Textil aus Kunststoff, wobei besonders bevorzugt Polypropylen, Polyurethan, Polyvinylchlorid, Polyester, Polycarbonat oder Polyethylen als Materialien verwendet werden. Solche Materialien sind in der Lage, Zugspannungen aufzunehmen und gleichzeitig einen Abschluss und damit eine Abdichtung gegenüber den auf die Oberfläche des Turms einwirkenden Umwelteinflüsse bereit zu stellen. Gleichzeitig weisen solche Materialien geringere Flächengewichte als beispielsweise Anstriche auf der Oberfläche des Turmes auf, so dass dieses Gewicht bei der Konstruktion hinsichtlich der statischen Druckbelastung reduziert werden kann, wodurch auch die Turmkonstruktion insgesamt schlanker ausgeführt werden kann. Gleichzeitig sind die Kosten dieser Materialien beispielsweise gegenüber Anstrichen geringer.

Eine weitere Lehre der Erfindung sieht vor, dass die Beschichtung zu unterschiedlichen Zeitpunkten der Turmerrichtung aufgebracht wird. Als erste Variante wird die Beschichtung nach Errichten des Turmes aufgebracht. Dieses kann von oben oder unten erfolgen. Alternativ kann die Beschichtung abschnittsweise während des Errichtens des Turmes oder auf die einzelnen Bestandteile bereits vor Errichtung des Turmes aufgebracht werden. Wird die Beschichtung vor Errichtung des Turmes aufgebracht, so hat es sich als vorteilhaft erwiesen, die Beschichtung vor Ort auf der Baustelle aufzubringen. Hierdurch reduzieren sich die Kosten der Beschichtung und gleichzeitig kann gewährleistet werden, dass die Beschichtung während des Transports der einzelnen Elemente nicht beschädigt wird. Die einzelnen Abschnitte der Beschichtung werden anschließend miteinander verbunden, wobei besonders bevorzugt das Verbinden über ein Verkleben bzw. ein Verschweißen der Stöße erfolgt.

Eine weitere Lehre der Erfindung sieht vor, dass die Beschichtung direkt auf die Bestandteile des Turms aufgebracht ist. Bevorzugt erfolgt das Aufbringen vollflächig durch Verkleben. Alternativ kann eine abschnittsweise Verklebung auf einer Oberfläche eines Bestandteils erfolgen. Durch die Verklebung wird sichergestellt, dass eine Aufnahme der statischen Belastung durch die Beschichtung erfolgt.

Eine weitere Lehre der Erfindung sieht vor, dass der Turm wenigstens teilweise aus Stahl, Beton, insbesondere Stahlbeton, und/oder Holz bzw. Holzwerkstoff errichtet wird. Bevorzugt handelt es sich bei dem Holz bzw. Holzwerkstoff um Brettsperrholz und/oder Holzverbundwerkstoffe.

Eine weitere Lehre der Erfindung sieht vor, dass die Beschichtung bei Holz eine geringere Dampfdurchlässigkeit als das Holz aufweist. Auf diese Weise wird die Diffusion umgekehrt, d. h. dass die Dampfdurchlässigkeit des Turms nicht nach außen hin größer wird, sondern nach innen. Im Inneren des Turms ist weiterhin bevorzugt ein Wärmeerzeuger angeordnet, wobei es sich bevorzugt um die Leistungselektronik einer Windkraftanlage handelt. Die Wärme ist dabei die abgegebene Verlustleistung der Leistungselektronik. Durch die Wärmeerzeugung wird die im Inneren des Turms befindliche Feuchtigkeit nach oben abgeführt und die aus dem Holz austretende Feuchtigkeit zum Inneren des Turms hin bewegt und ebenfalls mit abgeführt. Bei Beschädigung der Beschichtung wird ein Abtransport der Feuchtigkeit nach innen gewährleistet. Durch die in der Feuchtigkeit befindlichen Partikel und Mineralien wird die Beschädigung der Beschichtung nach und nach verschlossen und gleichzeitig weiterhin gewährleistet, dass die Feuchtigkeit nach innen hin entweicht.

Eine weitere Lehre der Erfindung sieht vor, dass die Tragstruktur des Turms zumindest teilweise aus Materialien errichtet ist, die für den Außeneinsatz nicht geeignet sind. Hierbei handelt es sich um Materialien, die eine Zulassung lediglich für den Inneneinsatz bei der Konstruktion von Gebäuden erhalten haben. Durch das Aufbringen der Beschichtung wird es möglich, derartige Materialien und auch Verbindungsmittel für die Tragkonstruktion eines Turms für eine Windkraftanlage einzusetzen, weil die Beschichtung den Zustand des Inneneinsatzes der Materialien gewährleistet.

Eine weitere Lehre der Erfindung sieht vor, dass der Turm aus einzelnen Bestandteilen vor Ort zusammengesetzt ist. Bei den vor Ort zusammengesetzten Bestandteilen handelt es sich um Flachelemente. Durch ein derartiges Zusammensetzen des Turmes aus einzelnen Flachelementen wird gewährleistet, dass der Transportaufwand der einzelnen Türme erheblich reduziert wird.

Die erfindungsgemäße Aufgabe wird hinsichtlich des Verfahrens dadurch gelöst, dass folgende Schritte vorgesehen werden: Montieren eines ersten Abschnitts eines Lehrgerüstes auf einem Fundament; Vorsehen der ersten Wandabschnitte; Montieren der ersten Wandabschnitte auf dem Fundament; Befestigen der ersten Wandabschnitte mit dem ersten Abschnitt des Lehrgerüsts; Aufbringen des nächsten Abschnitts des Lehrgerüst auf die Oberseite des vorherigen Lehrgerüstabschnitts; Anbringen der nächsten Wandabschnitte auf die darunter liegenden Abschnitte und Herstellen einer haltenden Verbindung mit den bereits montierten Wandabschnitten und mit dem Lehrgerüst; Wiederholen der Schritte bis der oberste Abschnitt des Lehrgerüsts montiert ist und die abschließenden Wandabschnitte befestigt sind, wobei die wandabschnitte so angeordnet werden, dass eine Mantellinie entsteht, deren Steigung mit der Turmhöhe zunimmt. Des weiterhin wird mit dem Verfahren ein Turm mit den zuvor genannten Merkmalen errichtet.

Nachfolgend wird die Erfindung an Hand von bevorzugten Ausführungsbeispielen in Verbindung mit einer Zeichnung näher erläutert. Dabei zeigt:
- Fig. 1:: eine räumliche Ansicht einer Windkraftanlage mit einer ersten Ausführungsform des erfindungsgemäßen Turms,
- Fig. 2:: eine räumliche Schnittansicht einer zweiten Ausführungsform des erfindungsgemäßen Turms,
- Fig. 3:: eine räumliche Schnittansicht der ersten Ausführungsform des erfindungsgemäßen Turms,
- Fig. 4:: eine Detailansicht eines erfindungsgemäßen Turms,
- Fig. 5:: eine weitere Detailansicht eines erfindungsgemäßen Turms,
- Fig. 6:: eine Schemadarstellung eines ersten Montageschrittes eines erfindungsgemäßen Verfahrens,
- Fig. 7:: eine Schemadarstellung eines zweiten Montageschrittes eines erfindungsgemäßen Verfahrens, und
- Fig. 8: eine Schemadarstellung eines dritten Montageschrittes eines erfindungsgemäßen Verfahrens.

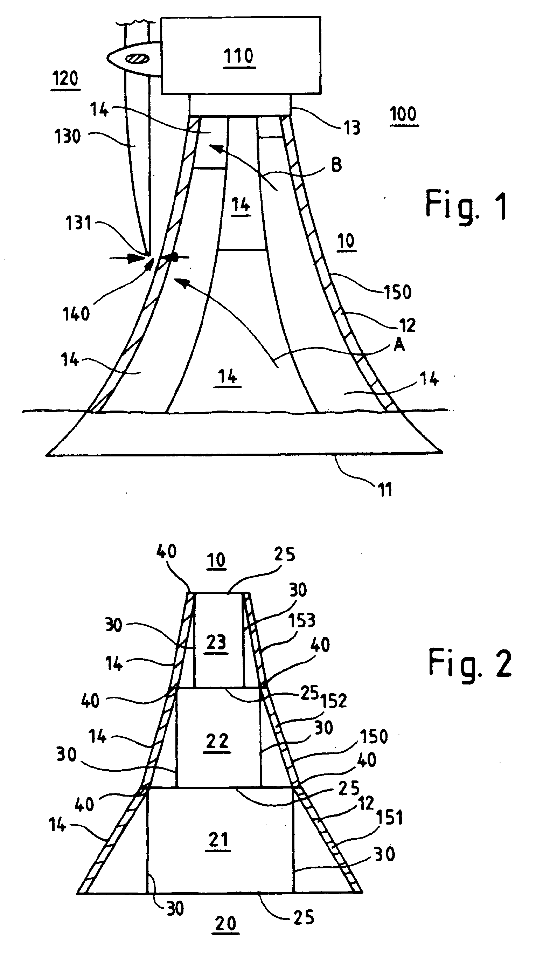

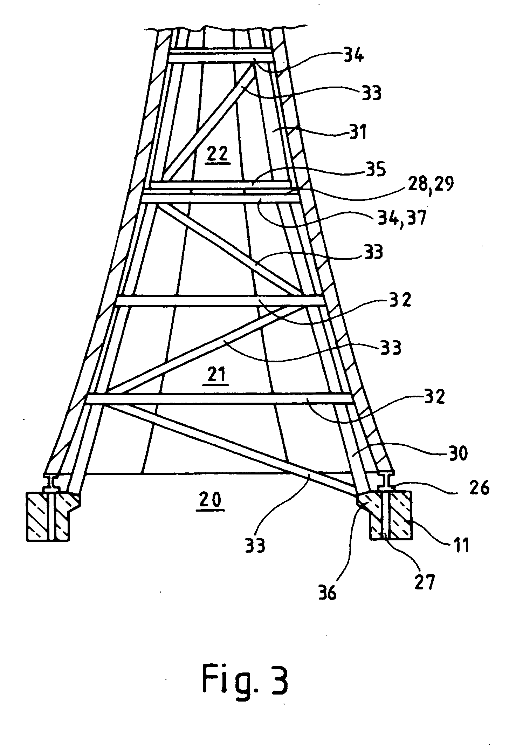

Fig. 1 zeigt Windkraftanlage 100 mit einer Gondel 110 und einem Rotor 120 mit einem dargestellten Rotorblatt 130 und einen Turm 10 aus. Der Turm 10 weist eine Gründung in Form eines Fundaments 11, einen Turmkörper 12 und einen Verbindungsstück 13 zur Aufnahme der Gondel 110 auf. An einer Spitze 131 des Rotorblattes 130 ist der Freilauf 140 im Bezug auf den Turm 10 dargestellt. Dieser Freilauf schwankt in Abhängigkeit der herrschenden Windstärke, was bei der Auslegung des Turms 10 zu berücksichtigen ist. In Fig.1 ist eine Mantellinie 150 dargestellt, die eine ansteigende Steigung mit zunehmender höhe des Turms 10 aufweist. Sie kann dabei eine Kurve sein, wie dieses in Fig. 1 und Fig. 3 dargestellt ist, oder aus einzelnen linearen Abschnitten 151, 152, 153 bestehen, wie dieses in Fig. 2 gezeigt ist.

Die Gründung 11 des Holzturmes 10 erfolgt durch ein Fundament 11, bevorzugt Stahlbetonfundament mit Stahlbetonsockel, besonders bevorzugt als Ortbeton. Die Geometrie des Stahlbetonsockels wird der Geometrie der Holzturmkonstruktion angepasst, wobei hier bevorzugt der Sockel zu einem polygonalen Hohlkörper betoniert ausgeführt wird. Bevorzugt wird im Hohlkörper als Fundamentsockel beispielsweise das für die Stromabgabe ins Netz benötigte Umrichter- und Trafosystem untergebracht. Der Zugang zur Anlage erfolgt durch den Fundamentsockel 11 und ermöglicht so einen homogenen Aufbau des Holzturmes 10.

Den Hauptanteil des Turmes 10 bildet ein Turmsabschnitt 12, der aus einzelnen Wandabschnitten 14 in Form von Holzplatten zusammengesetzt ist, die einen polygonalen Hohlkörper bilden. Die einzelnen Platten 14 sind hierbei in einer Helixstruktur A angeordnet. Vorliegend ist eine Doppelhelixstruktur dargestellt mit zwei Helices A und B. Jeder einzelne Wandabschnitt 14 besteht aus eine Platte aus einem Holzverbundwerkstoff in Form von Brettspreeholz oder miteinander verklebtem Vollholzelementen. Als Verbindungsmittel kommen bei den horizontalen und vertikalen Verbindungen Schwalbenschwänze oder Lochbleche (beide nicht dargestellt) in Fragen. Des Weiteren sind auch in Spalten eingelegte und bevorzugt verklebte Gewindestangen (nicht dargestellt) einsetzbar. Die Wandabschnitt 14 weisen eine Trapezform auf.

Zur Errichtung Hohlkörpers 12 als Turmkörper durch das Zusammenfügen der Holzplatten 14 in der Helixstruktur A bzw. Doppelhelixstruktur A, B wird als Montagehilfe und zum Erzeugen der Steigung der Mantellinie 150 ein Lehrgerüst 20 errichtet. Das Lehrgerüst 20 besteht aus Abschnitten wie beispielsweise 21, 22, 23, und wird bevorzugt als Fachwerkkonstruktion ausgeführt. Am oberen Ende des Fachwerks ist ein Podest 24 angeordnet, welches im Holzturm 12 als Aussteifungsebene 25 fungiert. Zwischen dem Fundamentsockel 11 und dem Holzturm 12 befindet sich beispielsweise ein Doppel - T - Träger 26. Die Verbindung des Trägers 26 mit dem Fundament 11 erfolgt über Gewindestangen 27. Die Verbindungen zwischen Holzturm und Doppel - T - Träger als Fußpunktausbildung, wird durch das Vorspannen von eingeklebten Gewindestangen oder durch Lochbleche 15 hergestellt. Das Verbindungsstück 13 zwischen Holzturm 12 und der Gondel 110 der Windenergieanlage 100 bildet ein Stahlrohradapter 13 in Form eines Kegelstumpfes. Der Turm 10 erhält eine vollflächig verklebte, textile Oberfläche (nicht dargestellt), die im Vorfeld auf die Platten 14 aufgebracht wird und nach Beendigung der Richtarbeiten überlappend den Turm 10 vollflächig umschließt.

Der Eingang zum Turm befindet sich im Fundamentsockel und erfolgt über eine Außentreppe mit Podest. Innerhalb des Fundamentsockels werden die Niederspannungskomponenten installiert. Hierzu gehört der Steuerschrank zur Bedienung der Anlage, Leistungsschränke, sowie optional eine Fernüberwachung und eine unabhängige Stromversorgung (USV). Um die Wärme des Transformators abzuführen ist unterhalb des Podestes ein Axiallüfter montiert. Der Aufstieg zum Turmkopf erfolgt über ein leitergeführtes Aufzugsystem oder über eine Steigleiter in Kombination mit einer Steigschutzeinrichtung. Bei Leiterlängen von mehr als 10m sind in Abständen von höchstens 10m Ruhebühnen angebracht. Im Holzturm befinden sich alle beispielsweise 3,75 m Zwischenpodeste 24, die zur Aussteifung der Turmkonstruktion statisch angesetzt werden.

Das Lehrgerüst 20 dient als Montagehilfe und zur Gewährleistung der richtigen Lagefixierung der einzelnen Holzplatten 14, sowie zum Erzeugen der Biegung der Platten, um eine entsprechende Kurve der Mantellinie 150 zu erzeugen. Die einzelnen Aussteifungsebenen 25 bestehen aus Holzplatten 28, 29. Diese liegen beispielsweise auf Kopfhölzern 34 oder Unterzügen 37 des Lehrgerüstes 20 auf. Jede einzelne Aussteifungsebenen 25 des Lehrgerüstes 20 wird vierfach durch das Vorsehen von Ständern 30, 31 unterstützt, um die Lage der Aussteifungsebene 25 zu gewährleisten und das Eigengewicht sowie die Montagelasten in das Fundament 11 abzutragen. Die Ständer 30, 31 sind dabei mit Riegeln 32 und Streben 33 sowie Kopf- und Sohlhölzern 34, 35 miteinander als Fachwerk verbunden (Fig. 3). Das Lehrgerüst selber besteht aus einem ersten Lehrgerüstabschnitt 21, der Basisständer 30 aufweist, die auf einem Gerüstfundament 36 aufstehen, das Bestandteil des Fundaments 11 ist und mit dem Turmfundament verbunden ist. Die Basisständer 30 sind diagonal angeordnet, so dass an ihrem oberen Ende, an dem das Kopfholz 34 bzw. ein Unterzug 37 vorgesehen ist, auf dem der nächste Lehrgerüstabschnitt vorgesehen wird. In der Aussteifungsebene 25 sind beispielsweise ein Kabelschacht und ein Schacht für einen Aufzug oder ein Leitersystem vorgesehen.

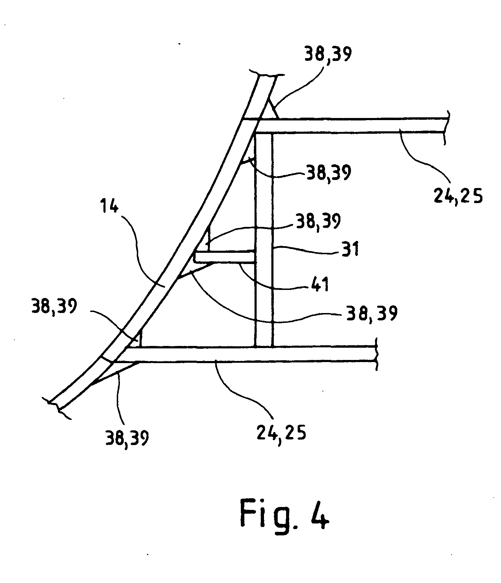

Die Ränder der Aussteifungsebene 25 werden mit Kanthölzern 38 bzw. Streichbalken 39 abgedichtet (Fig. 4). Mit diesen Elementen wird auch eine aussteifende Verbindung zwischen Aussteifungseben 25 und Wandelementen 14 des Turms 10 hergestellt. Das Lehrgerüst 20 endet mit einem oberen Lehrgerüstabschnitt (nicht dargestellt), der kleiner ist, als die letzten Turmwandabschnitte 14, so dass keine Verbindung zwischen dem Adapter 13 und dem Lehrgerüst 20 entsteht.

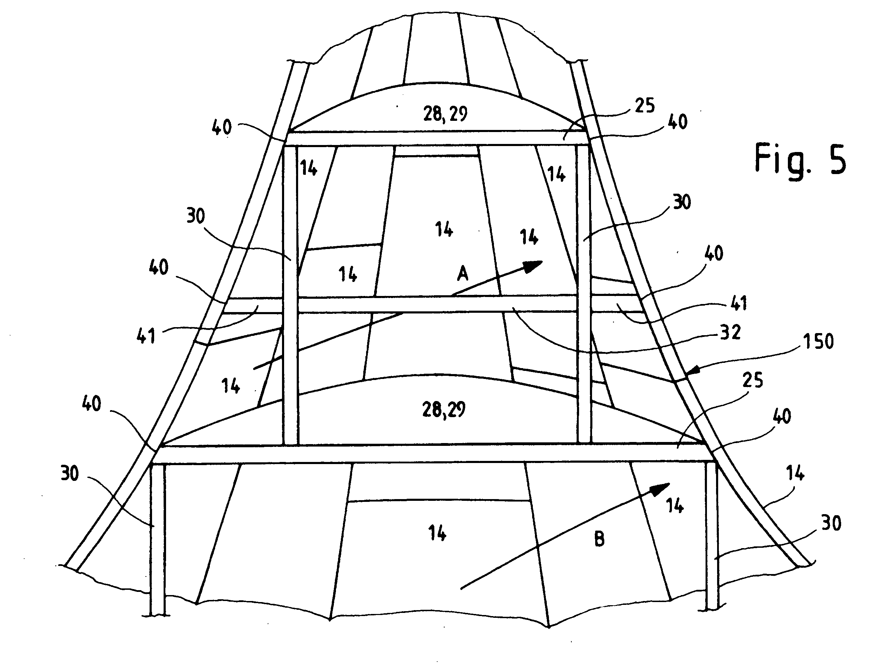

Im Lehrgerüst sind Befestigungspunkte 40 vorgesehen, an denen das Lehrgerüst 20 mit den Wandabschnitten 14 verbunden wird. Soll die Mantellinie als eine Kurve vorgesehen werden, so sind neben den Befestigungspunkten 40 an den Aussteifungsebenen 25 weitere Befestigungspunkte 40 an den Riegeln 32 und/oder an Verbindungselementen 41, die an den Ständern 30, 31 angebracht sind, vorgesehen. Auf diese Weise können die Wandabschnitte 14 verformt werden, so dass sie zur Mitte des Lehrgerüsts 20 konvex im Bezug auf ihre Endebenen vorgesehen werden. Die Verformung soll dabei so ausgeführt sein, dass keine Beschädigungen der Wandabschnitte 14 auftreten. (Fig. 5)

Fig. 2 zeigt eine weitere Ausführungsform eines Erfindungsgemäßen Turm 10. Bei diesem Turm sind einzelne Stufen vorgesehen, an die die Wandelemente 14 montiert sind. In dieser Ausführungsform sind die Wandabschnitte nicht als Helix A, B vorgesehen. Die Mantellinienabschnitte 151, 152, 153 sind linear ausgeführt und am Lehrgerüst befestigt. In dieser Ausführungsform ist es aber auch möglich, eine Kurve als Mantellinie 150 vorzusehen.

Zum Errichten des Turms 10 werden die fertig abgebundenen Holzplatten 14 zum Aufstellplatz gefahren. Anschließend wird das Lehrgerüst 20 begonnen, indem der unterste erste Abschnitt 21 des Lehrgerüsts 20 auf dem Fundament 11, 36 aufgestellt wird. Die untersten Holzplatten 14 werden mit dem ersten Lehrgerüstabschnitt 21 und untereinander mittels Verschraubung form- und kraftschlüssig an den Befestigungspunkten 40 verbunden. Dabei kommen entweder Lochbleche oder Schwalbenschwänze zum Einsatz. Danach wird die Konstruktion auf den bereits fertiggestellten Fundamentsockel 11 gehoben. Die Fußpunktverbindung zwischen Holzturm 12 und Fundament 11 erfolgt mittels eingeklebten Gewindestangen 27 in den Platten, welche mit den einzelnen Doppel T- Profilen 26 durch Muttern angeschlossen und bereits vormontiert sind. Nach dem Ablassen des unteren Turmsegmentes erfolgt das Verschrauben mit dem Fundamentsockel. Die Verbindungen der Vertikalstöße der Holzplatten 14 werden zeitgleich mit dem Voranschreiten der Holzturmrichtung ausgebildet. Die Verbindung der Vertikalstöße erfolgt durch das Einkleben von Vollholzkeilen. Bei der Verbindung mittels Schwalbenschwänze wird durch die geometrische Anordnung beim Abbund der Platten 14 eine hohe Passgenauigkeit der Plattenanordnung im Horizontalstoß beim Zusammenfügen erreicht. Die ankommende Holzplatte 14 wird am jeweils oberen Holzplattenende angesetzt und mittels einer Schraubvorrichtung schlüssig herangezogen. Während des Richtens wird auch hier der Bauzustand durch eine Verschraubung mit dem Lehrgerüst erreicht. Alternativ werden Lochbleche anstelle von Schwalbenschwänzen vorgesehen. Die Ausführung der Vertikalstöße mit eingeklebten Vollholzkeilen. Der form- und kraftschlüssige Verbund im Bereich der Verbindung der Horizontalstöße der Holzplatten erfolgt über eingeklebte Gewindestangen, welche mit dem metallischen Schwalbenschwanz verschraubt und vorgespannt werden. Die Übertragung der Zugkräfte zwischen Holz - Holz bzw. Stahl - Holz kann über Lochblech-Verbinder erfolgen. Die Lochblech-Verbinder sind gelochte Stahlbleche.

Der Adapter 13 besteht aus einem ggf. konischen Stahlelement mit einem Fußflansch zum Anschluss an den Turm 12 und einem Kopfflansch zum Anschluss an die Gondel. An Kopfflansch sind Bohrungen vorgesehen zum Durchstecken von Gewindestangen der Gondel zum Herstellen einer haltenden Verbindung. Am Fußflansch sind entweder ebenfalls Bohrungen oder Gewindestangen vorgesehen.

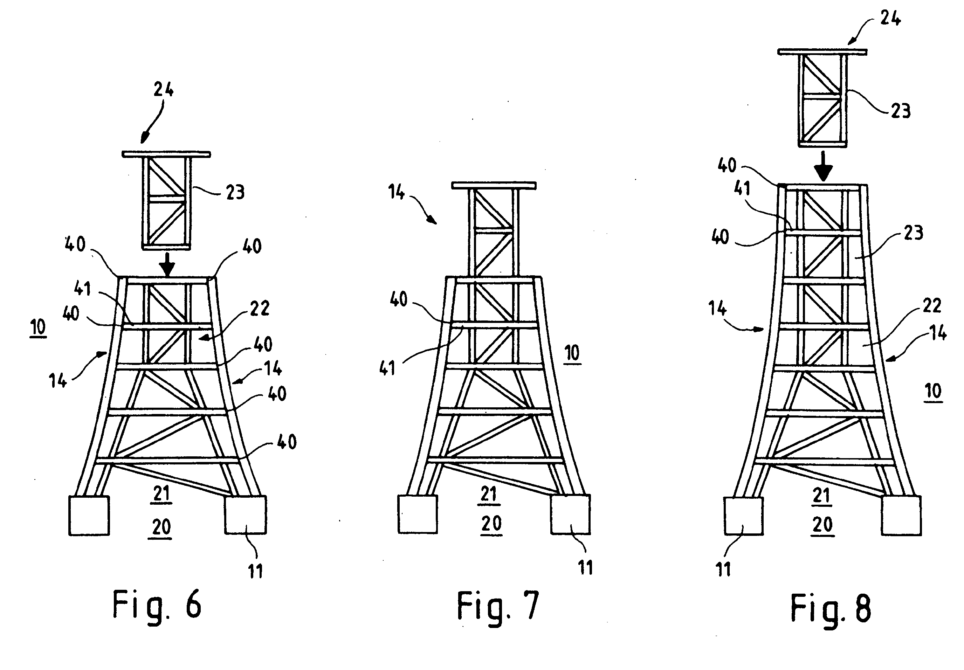

Zur Montage des Turms 10 (Fig. 6 bis 8) wird auf dem Fundament 11 ein unterer Lehrgerüstabschnitt 21 aufgestellt, an den die ersten Wandabschnitte 14 befestigt werden, wobei diese so angeordnet sind, dass sie auf dem Fundament 11 aufstehen. Die Wandabschnitte werden über die Befestigungspunkte 40 mit den Riegelns 32 und den Aussteifungsebenen 25 sowie den Verbindungselementen 41 verbunden und darüber in den notwendige Formgebracht, so dass die gewünschte Mantellinie 150 erzeugt wird. Anschließend wird auf die Aussteifebene 25 der nächste Gerüstabschnitt 22 abgesetzt und mit dem darunter liegenden Abschnitt 21 verbunden. Wiederum werden die Wandabschnitte 14 umlaufend montiert, wobei eine haltende Verbindung mit den zuvor montierten Wandabschnitten erzeugt wird. Die Wandabschnitte werden über die Befestigungspunkte 40 mit den Riegelns 32 und den Aussteifungsebenen 25 sowie den Verbindungselementen 41 verbunden und darüber in den notwendige Formgebracht, so dass die gewünschte Mantellinie 150 erzeugt wird. Des Weiteren dient die Verbindung mit den Lehrgerüstabschnitten der besseren Montierbarkeit. Nach der abschießenden Montage der Wandabschnitte 14 wird der nächste Lehrgerüstabschnitt montiert. Die Vormontage der Lehrgerüstabschnitte 21, 22, 23 kann dabei vor Ort erfolgen. Bei einer Helixmontage sind die Lehrgerüstabschnitte kleiner in der Höhe als die einzelnen Wandabschnitte 14, so dass die Montage der Lehrgerüstabschnitte sogar im Wechsel mit dem jeweils nächste einem Wandabschnitt erfolgen kann.

### Bezugszeichenliste

| | | | |
|---|---|---|---|
| A | erste Helix | 100 | Windkraftanlage |
| B | zweite Helix | 110 | Gondel |
| | | 120 | Rotor |
| 10 | Turm | 130 | Rotorblatt |
| 11 | Fundament/Gründung | 131 | Spitze |
| 12 | Turmkörper | 140 | Freilauf |
| 13 | Verbindungsstücke | 150 | Mantellinie |
| 14 | Wandabschnitt | 151 | linearer Mantellinienabschnitt |
| 20 | Lehrgerüst | 152 | linearer Mantellinienabschnitt |
| 21 | Abschnitt | 153 | linearer Mantellinienabschnitt |
| 22 | Abschnitt | | |
| 23 | Abschnitt | | |
| 24 | Podest | | |
| 25 | Aussteifungsebene | | |
| 26 | T-Träger | | |
| 27 | Gewindestange | | |
| 28 | Holzplatte | | |
| 29 | Holzplatte | | |
| 30 | Ständer | | |
| 31 | Ständer | | |
| 32 | Riegel | | |
| 33 | Strebe | | |
| 34 | Kopfholz | | |
| 35 | Sohlholz | | |
| 36 | Gerüstfundament | | |
| 37 | Unterzug | | |
| 38 | Kantholz | | |
| 39 | Streichbalken | | |
| 40 | Befestigungspunkt | | |
| 41 | Verbindungselement | | |

## Patentansprüche

1. Turm (10) für eine Windkraftanlage mit Wänden, die zumindest teilweise aus einzelnen Wandabschnitten (14) hergestellt sind, wobei die Wandabschnitte (14) über Verbindungsmittel miteinander verbunden sind, wobei im Turminneren zumindest teilweise ein Lehrgerüst (20) vorgesehen ist, mit dem die Wandabschnitte (14) haltend verbunden sind, **dadurch gekennzeichnet, dass** die Wandabschnitte (14) aus einem Holzwerkstoff hergestellt sind, wobei die Wandabschnitte (14) so auf dem Lehrgerüst (20) angeordnet sind, dass eine bei einem Vertikalschnitt durch die aus Wandabschnitten (14) gebildete Turmwand entstehende Mantellinie zumindest Abschnittsweise eine Kurve mit mit zunehmender Turmhöhe größer werdender Steigung ist, wobei das Lehrgerüst (20) eine Montagehilfe ist, das zur Erzeugung der Steigung der Mantellinie (150) dient, und wobei das Lehrgerüst (20) keine statisch relevante Funktion im Turm (10) selbst übernimmt.

2. Turm nach Anspruch 1, **dadurch gekennzeichnet, dass** der Schnitt bei einem Turm (10) mit einer polygonalen Grundfläche mittig durch einen Wandabschnitt (14) verläuft.

3. Turm nach Anspruch 1 oder 2, **dadurch gekennzeichnet, dass** die Mantellinie (150) wenigstens teilweise eine Parabel, ein Polynom, eine Exponentialfunktion, ein Kreisbogen und/oder eine Klothoide ist.

4. Turm nach einem der Ansprüche 1 bis 3, **dadurch gekennzeichnet, dass** das Lehrgerüst (20) aus mehreren Abschnitten (21,22,23) zusammengesetzt sind, wobei ein Abschnitt (21,22,23), bevorzugt an dessen oberen Ende, ein Podest (24) aufweist, mit dem die Wandabschnitte (14) verbunden werden, wobei das Podest (24) bevorzugt eine Aussteifungsebene des Turms (10) ist, und/oder wobei bevorzugt das Lehrgerüst (20) aus Holz besteht, und/oder eine Fachwerkskonstruktion ist, wobei besonders bevorzugt die Fachwerkskonstruktion wenigstens 4 Ständer (30) aufweist, die mit Streben (33), Riegeln (32) Kopf- und Sohlenhölzern (34,35) verbunden sind, und/oder das Podest (24) aus wenigstens zwei Abschnitten gebildet ist.

5. Turm nach einem der Ansprüche 1 bis 4, **dadurch gekennzeichnet, dass** das die Wandabschnitte (14) zueinander Helix bildend versetzt angeordnet sind, wobei es sich bevorzugt bei der Helix um eine Einfachheli (A) oder um eine aus mehreren Einfachhelices (A,B) gebildeten Mehrfachhelix handelt, und/oder dass die oberen Stoßseiten der einzelnen Bestandteile der Helix/Helices (A,B) eine durchgehende Linie und/oder eine Stufung aufweisen.

6. Turm nach einem der Ansprüche 1 bis 5, **dadurch gekennzeichnet, dass** es sich bei dem Holzwerkstoff um Brettsperrholz und/oder Holzverbundwerkstoff handelt, und/oder der Turm (10) aus den einzelnen Wandabschnitten (14) vor Ort zusammensetztbar ist.

7. Turm nach einem der Ansprüche 1 bis 6, **dadurch gekennzeichnet, dass** die Oberfläche der Außenseite des Turms (10) mit einer Beschichtung versehen ist, wobei die Beschichtung bevorzugt wenigstens einen Teil der auf die Oberfläche des Turms (10) wirkende Zugbelastung aufnimmt und die Oberfläche der Außenseite des Turms gegen die von außen auf die Oberfläche einwirkenden Umwelteinflüsse, insbesondere Feuchtigkeit, abdichtet.

8. Turm nach Anspruch 7, **dadurch gekennzeichnet, dass** die Beschichtung auf die Oberfläche der Außenseite des Turm (10) wenigstens teilweise vollflächig aufgebracht ist, und/oder dass es sich bei der Beschichtung um einen Schichtstoff, eine Folie, ein Gewebe, eine Platte und/oder ein Textil handelt, wobei die Beschichtung bevorzugt wenigstens teilweise auf die Turmoberfläche aufgeklebt ist, und/oder die Beschichtung aus einzelnen Abschnitten besteht, die miteinander verbunden sind, bevorzugt verklebt oder verschweißt, wobei die Beschichtung besonders bevorzugt direkt auf die Wandabschnitte des Turms (10) aufgebracht ist.

9. Turm nach einem der Ansprüche 1 bis 8, **dadurch gekennzeichnet, dass** der Wandabschnitt (14) nach dem Anbringen auf dem Lehrgerüst (20) eine Biegung in Richtung der Mantellinie (150) aufweist.

10. Turm nach einem der Ansprüche 3 bis 9, **dadurch gekennzeichnet, dass** das Podest (24) eines Abschnitt (21,22,23) des Lehrgerüsts (20) der auf einen bereits errichteten darunteriegenden Abschnitt (21,22,23) des Lehrgerüsts (20) aufgesetzt ist, in Richtung zur Mittelachse des Turms (10) äquivalent kleiner ausgeführt ist.

11. Turm nach Anspruch 3 bis 10, **dadurch gekennzeichnet, dass** wenigstens ein Abschnitt (21,22,23) des Lehrgerüsts (20) einen Montagebereich zum Anbringen von Wandabschnitten (14) aufweist, der zwischen dem Fuß des Abschnittes (21,22,23) und dem Podest (24) des Abschnittes (21,22,23) angeordnet ist.

12. Turm nach einem der Ansprüche 1, 2 oder 4 bis 11, **dadurch gekennzeichnet, dass** die Mantellinie (150) abschnittsweise linear ansteigend ist.

13. Verfahren zum Errichten eines Turmes (10) für eine Windkraftanlage nach einem der vorherstehenden Ansprüche mit den Schritten: Montieren eines ersten Abschnitts (21) eines Lehrgerüstes (20) auf einem Fundament (11) Vorsehen der ersten Wandabschnitte (14); Montieren der ersten Wandabschnitte (14) auf dem Fundament (11); Befestigen der ersten Wandabschnitte (14) mit dem ersten Abschnitt (21) des Lehrgerüsts (20); Aufbringen des nächsten Abschnitts (22) des Lehrgerüst (20) auf die Oberseite des vorherigen Lehrgerüstabschnitts (21); Anbringen der nächsten Wandabschnitte (14) auf die darunter liegenden Abschnitte (14) und Herstellen einer haltenden Verbindung mit den bereits montierten Wandabschnitten und mit dem Lehrgerüst (20); Wiederholen der Schritte bis der oberste Abschnitt (23) des Lehrgerüsts (20) montiert ist und die abschließenden Wandabschnitte (14) befestigt sind, **dadurch gekennzeichnet, dass** die Wandabschnitte (14) so angeordnet werden, dass eine Mantellinie (150) entsteht, die zumindest Abschnittsweise eine Kurve mit mit zunehmender Turmhöhe größer werdender Steigung ist.

## Claims

1. Tower (10) for a wind power plant having walls which are produced at least partially from individual wall sections (14), the wall sections (14) being connected to one another via connecting means, a falsework (20) being provided at least partially in the tower interior, by way of which falsework the wall sections (14) are connected in a retentive manner, **characterized in that** the wall sections (14) are produced from a wooden material, the wall sections (14) being arranged on the falsework (20) in such a way that a surface line which is produced in the case of a vertical section through the tower wall which is formed from wall sections (14) is, at least in sections, a curve having a gradient which becomes greater as the tower height increases, the falsework (20) being an assembly aid which serves to produce the gradient of the surface line (150), and the falsework (20) not assuming any statically relevant function in the tower (10) itself.

2. Tower according to Claim 1, **characterized in that** the section runs centrally through a wall section (14) in the case of a tower (10) having a polygonal base area.

3. Tower according to Claim 1 or 2, **characterized in that** the surface line (150) is at least partially a parabola, a polynomial, an exponential function, a circular arc and/or a clothoid.

4. Tower according to one of Claims 1 to 3, **characterized in that** the falsework (20) is assembled from a plurality of sections (21, 22, 23), a section (21, 22, 23) having a platform (24), preferably at its upper end, to which platform the wall sections (14) are connected, the platform (24) preferably being a stiffening level of the tower (10), and/or the falsework (20) preferably being composed of wood, and/or being a timber frame construction, the timber frame construction particularly preferably having at least 4 stands (30) which are connected by way of struts (33), bars (32), head blocks and sole blocks (34, 35), and/or the platform (24) being formed from at least two sections.

5. Tower according to one of Claims 1 to 4, **characterized in that** the wall sections (14) are arranged offset with respect to one another so as to form a helix, the helix preferably being a single helix (A) or a multiple helix which is formed from a plurality of single helices (A, B), and/or **in that** the upper abutment sides of the individual constituent parts of the helix/helices (A, B) having a continuous line and/or a step.

6. Tower according to one of Claims 1 to 5, **characterized in that** the wooden material is cross-laminated timber and/or wooden composite material, and/or the tower (10) can be assembled from the individual wall sections (14) on site.

7. Tower according to one of Claims 1 to 6, **characterized in that** the surface of the outer side of the tower (10) is provided with a coating, the coating preferably absorbing at least part of the tensile loading which acts on the surface of the tower (10), and the surface sealing the outer side of the tower against the environmental influences, in particular moisture, which act on the surface from the outside.

8. Tower according to Claim 7, **characterized in that** the coating is applied to the surface of the outer side of the tower (10) at least partially over the full area, and/or the coating is a layer material, a film, a panel and/or a textile, the coating preferably being adhesively bonded at least partially to the tower surface, and/or the coating comprises individual sections which are connected to one another, preferably adhesively bonded or welded, the coating particularly preferably being applied directly to the wall sections of the tower (10).

9. Tower according to one of Claims 1 to 8, **characterized in that**, after being attached to the falsework (20), the wall section (14) has a curvature in the direction of the surface line (150).

10. Tower according to one of Claims 3 to 9, **characterized in that** the platform (24) of a section (21, 22, 23) of the falsework (20) which is placed onto a section (21, 22, 23) of the falsework (20) which lies beneath it and has already been erected is of equivalently smaller configuration in the direction of the center axis of the tower (10).

11. Tower according to Claims 3 to 10, **characterized in that** at least one section (21, 22, 23) of the falsework (20) has a mounting region for attaching wall sections (14), which mounting region is arranged between the foot of the section (21, 22, 23) and the platform (24) of the section (21, 22, 23).

12. Tower according to one of Claims 1, 2 or 4 to 11, **characterized in that** the surface line (150) rises linearly in sections.

13. Method for erecting a tower (10) for a wind power plant according to one of the preceding claims having the following steps: mounting of a first section (21) of a falsework (20) on a foundation (11); provision of the first wall sections (14); mounting of the first wall sections (14) on the foundation (11); fastening of the first wall sections (14) to the first section (21) of the falsework (20); application of the next section (22) of the falsework (20) to the upper side of the preceding falsework section (21); attaching of the next wall sections (14) to the sections (21) which lie beneath them and production of a retentive connection to the wall sections (14) which are already mounted and to the falsework (20); repetition of the steps until the topmost section (23) of the falsework (20) is mounted and the finishing wall sections (14) are fastened, **characterized in that** the wall sections (14) are arranged in such a way that a surface line (150) is produced which, at least in sections, is a curve having a gradient which becomes greater as the tower height increases.

## Revendications

1. Mât (10) d'éolienne doté de parois fabriquées au moins en partie à partir de sections de paroi (14) individuelles, les sections de paroi (14) étant reliées entre elles par des moyens de liaison, un châssis de jauge (20) étant prévu au moins en partie à l'intérieur du mât et servant à relier les sections de paroi (14) entre elles tout en les maintenant, **caractérisé en ce que** les sections de paroi (14) sont fabriquées à partir d'un matériau ligneux, les sections de paroi (14) étant disposées de telle sorte sur le châssis de jauge (20) qu'une ligne d'enveloppe est produite par une coupe verticale pratiquée à travers la paroi de mât formée de sections de paroi (14), au moins sur certaines sections, une courbe présentant une inclinaison croissante à mesure que la hauteur de mât augmente, le châssis de jauge (20) étant un élément d'aide au montage servant à réaliser l'inclinaison de la ligne d'enveloppe (150) et le châssis de jauge (20) n'occupant aucune fonction statiquement essentielle dans le mât (10).

2. Mât selon la revendication 1, **caractérisé en ce que** la coupe dans un mât (10) s'étend de façon centrale à travers une section de paroi (14), avec une surface de base polygonale.

3. Mât selon la revendication 1 ou 2, **caractérisé en ce que** la ligne d'enveloppe (150) est au moins en partie une parabole, un polynôme, une fonction exponentielle, un arc de cercle et/ou une clothoïde.

4. Mât selon l'une quelconque des revendications 1 à 3, **caractérisé en ce que** le châssis de jauge (20) se compose de plusieurs sections (21, 22, 23), une section (21, 22, 23) comportant de façon préférée au niveau de son extrémité supérieure un promontoire (24) au moyen duquel les sections de paroi (14) sont reliées, le promontoire (24) étant de façon préférée un plan de rigidification du mât (10), et/ou le châssis de jauge (20) étant de façon préférée en bois et/ou étant une construction en treillis, la construction en treillis comportant de façon particulièrement préférée au moins 4 montants (30) reliés par des entretoises (33), des traverses (32), des bois de tête et de semelle (34, 35) et le promontoire (24) étant formé d'au moins deux sections.

5. Mât selon l'une quelconque des revendications 1 à 4, **caractérisé en ce que** les sections de paroi (14) formant entre elles une hélice sont disposées de façon décalée, l'hélice étant de façon préférée une hélice simple (A) ou une hélice multiple composée de plusieurs hélices simples (A, B) et/ou que les côtés de collision supérieurs des composants individuels de la ou des hélices (A, B) prennent la forme d'une ligne continue et/ou d'une gradation.

6. Mât selon l'une quelconque des revendications 1 à 5, **caractérisé en ce que** le matériau ligneux prend la forme de planches de bois contreplaqué et/ou de matériau ligneux composite et/ou que le mât (10) peut être composé sur place de sections de paroi (14) individuelles.

7. Mât selon l'une quelconque des revendications 1 à 6, **caractérisé en ce que** la surface du côté extérieur du mât (10) est pourvue d'un revêtement, le revêtement recevant de façon préférée au moins une partie de la charge de traction s'exerçant sur la surface du mât (10) et étanchéifiant la surface du côté extérieur du mât par rapport aux influences de l'environnement s'exerçant de l'extérieur sur la surface, notamment l'humidité.

8. Mât selon la revendication 7, **caractérisé en ce que** le revêtement est appliqué sur la surface du côté extérieur du mât (10) au moins en partie sur la totalité de la surface et/ou que le revêtement est une matière stratifiée, un film, un tissu, une plaque et/ou un textile, le revêtement étant collé de façon préférée au moins en partie sur la surface de mât et/ou le revêtement se composant de sections individuelles reliées, de façon préférée collées ou soudées, entre elles, le revêtement étant directement appliqué, de façon particulièrement préférée, sur les sections de paroi du mât (10).

9. Mât selon l'une quelconque des revendications 1 à 8, **caractérisé en ce que** la section de paroi (14) comporte après application sur le châssis de jauge (20) un cintre en direction de la ligne d'enveloppe (150).

10. Mât selon l'une quelconque des revendications 3 à 9, **caractérisé en ce que** le promontoire (24) d'une section (21, 22, 23) du châssis de jauge (20) placé sur une section (21, 22, 23) du châssis de jauge (20) déjà érigée au-dessous est réalisé de façon aussi petite en direction de l'axe central du mât (10).

11. Mât selon les revendications 3 à 10, **caractérisé en ce qu'**au moins une section (21, 22, 23) du châssis de jauge (20) comporte une zone de montage permettant d'amener les sections de paroi (14) disposées entre le pied de la section (21, 22, 23) et le promontoire (24) de la section (21, 22, 23).

12. Mât selon l'une quelconque des revendications 1, 2 ou 4 à 11, **caractérisé en ce que** la ligne d'enveloppe (150) suit une pente montante linéaire sur certaines sections.

13. Procédé permettant d'ériger un mât (10) d'éolienne selon l'une quelconque des revendications précédentes, avec les étapes suivantes : montage d'une première section (21) d'un châssis de jauge (20) sur un socle (11) ; amenée des premières sections de paroi (14) ; montage des premières sections de paroi (14) sur le socle (11) ; fixation des premières sections de paroi (14) à la première section (21) du châssis de jauge (20) ; mise en place de la section (22) suivante du châssis de jauge (20) sur le côté supérieur de la section de châssis de jauge (21) précédente ; amenée des sections de paroi (14) suivantes sur les sections (14) placées en dessous ; et fabrication d'une liaison de maintien avec les sections de paroi (14) déjà montées et avec le châssis de jauge (20) ; répétition des étapes jusqu'à ce que la section (23) supérieure du châssis de jauge (20) soit montée et que les sections de paroi (14) suivantes soient fixées, **caractérisé en ce que** les sections de paroi (14) sont disposées de telle sorte qu'une ligne d'enveloppe (150) se produit ayant au moins sur certaines sections une courbe présentant une inclinaison croissante à mesure que la hauteur du mât augmente.
